# EUROPEAN PATENT APPLICATION

(11) **EP 4 614 027 A1**
(43) Date of publication of application: **10.09.2025**
(21) Application number: 23901047.3
(22) Date of filing: 05.12.2023
(51) Int. Cl.: F16H 21/28, F16H 3/10, F16H 3/089, F16H 1/32, F16H 57/00, H02K 7/116

(54) **MOTOR-INTEGRATED CONTINUOUSLY VARIABLE TRANSMISSION**

(30) Priority: 09.12.2022 KR 20220171148
(71) Applicant: Kim, Hyeon Soo, Gimhae-si, Gyeongsangnam-do 50958 (KR)
(72) Inventor: Kim, Hyeon Soo, Gimhae-si, Gyeongsangnam-do 50958 (KR)
(74) Representative: RGTH
(86) International application number: PCT/KR2023/019852
(87) International publication number: WO 2024/123028

(57) **Abstract**

The present invention provides a motor-integrated continuously variable transmission, comprising: an input shaft for receiving power from the outside; a planetary gear which receives part of the power from the input shaft; a driven shaft which receives part of the power from the input shaft; a first link shaft which rotates by receiving power from the driven shaft; a link actuator which operates by the rotation of the first link shaft; a shift lever which adjusts the shift ratio of the link actuator; and an output shaft which receives power from the link actuator and the planetary gear, wherein the link actuator comprises: an eccentric disk for rotating eccentrically around the first link shaft; a cam for reciprocating up and down by the rotation of the eccentric disk; a first link connected to the cam to transmit power to the output shaft; and a one-way clutch which is provided between the first link and the output shaft and transmits power only in the direction in which the output shaft rotates in one direction, thereby rotating the first link shaft by the driven shaft so that the first link shaft and the output shaft are driven to rotate in the same direction, and the driven shaft further includes: a motor shaft driven by a motor; a reduction gear which reduces speed by the drive shaft and transmits power to the driven shaft; and a one-way clutch installed on the reduction gear to rotate in one direction, to receive power in a hybrid manner through the input shaft or the motor shaft.

## Description

### Technical Field

The present disclosure relates to a motor-integrated continuously variable automatic transmission. More particularly, the present disclosure relates to a motor-integrated continuously variable transmission capable of receiving rotational power transmitted from outside or rotational power transmitted from a motor.

### Background Art

A continuously variable transmission is capable of being utilized in numerous devices that utilize rotational power, such as a bicycle, a car, a motorcycle, and other vehicles.

Recently, there is a growth in demand for a continuously variable transmission so as to maximize efficiency of an engine and a motor.

The applicant of the present disclosure proposed Korean Patent No. 10-1241819 to configure a continuously variable transmission. In Korean Patent No. 10-1241819, a continuously variable transmission capable of being rotated in both forward and reverse directions is proposed.

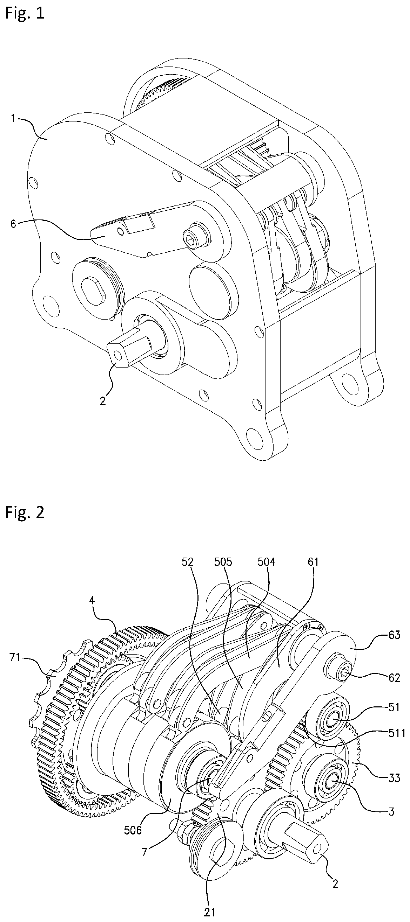

In a case of configuring a continuously variable transmission according to Korean Patent No. 10-1241819, an input gear 310 and an output shaft 400 are configured to have opposite rotation directions, as illustrated in FIG. 2 of the cited patent. In this case, the forward and reverse rotations may be performed, but there is a limit on application thereof to an actual product because large noise, vibration, and impact are generated, and it is difficult to identify a cause of the noise, vibration, and impact.

### Disclosure

### Technical Problem

Long-term research and development enabled the applicant of the present disclosure to find that a cause of noise, vibration, and impact generated in the continuously variable transmission according to Korean Patent No. 10-1241819 is due to the rotations in opposite directions, and a motor-integrated continuously variable transmission is provided that significantly reduces noise, vibration, and impact by having a configuration in which an input gear (a second driven gear, an eccentric disk 501, or a first link shaft 51 in the present disclosure) and an output shaft 7 have the same rotation direction.

An objective of the present disclosure is to provide a motor-integrated continuously variable transmission having a structure that significantly reduces noise, vibration, and impact in order to solve limits of the continuously variable transmission in the related art as described above.

In addition, another objective of the present disclosure is to provide a motor-integrated continuously variable transmission capable of being rotated by receiving rotation transmitted from a motor, thereby being capable of using power of the motor.

### Technical Solution

In order to solve limits of the continuously variable transmission in the related art as described above, there is provided a motor-integrated continuously variable transmission including: an input shaft configured to receive power from outside; a planetary gear configured to receive a part of the power transmitted from the input shaft; a driven shaft configured to receive a part of the power transmitted from the input shaft; a first link shaft configured to be rotated by receiving power transmitted from the driven shaft; a link actuator configured to be operated by rotation of the first link shaft; a shift lever configured to adjust a shift ratio of the link actuator; and an output shaft configured to receive power transmitted from the link actuator and the planetary gear. Furthermore, the link actuator includes: an eccentric disk configured to be eccentrically rotated around the first link shaft; a cam configured to perform a vertical reciprocating motion by rotation of the eccentric disk; a first link connected to the cam and configured to transmit power to the output shaft; and a one-way clutch provided between the first link and the output shaft and configured to transmit power only in the direction in which the output shaft is rotated. Furthermore, as the first link shaft is rotated by the driven shaft, the first link shaft and the output shaft are driven in the same rotation direction. Furthermore, the motor-integrated continuously variable transmission further includes: a motor shaft configured to driven by a motor; a deceleration gear configured to be decelerated by the driving shaft and to transmit power to the driven shaft; and a one-way clutch mounted on the deceleration gear and configured to be rotated in one direction. Therefore, the driven shaft receives power from the input shaft or the motor shaft in a hybrid manner.

In addition, the link actuator may include: a plurality of link sets including the eccentric disk, the cam, the first link, and the one-way clutch that is provided between the first link and the output shaft. Furthermore, each of the link sets may include: a hinge part connected to a first side of the cam; and a second link having a first end connected to the hinge part such that the second link extends from the hinge part. Furthermore, a first end of the first link may be connected to the hinge part, and a second end of the first link may be connected to the one-way clutch provided between the first link and the output shaft. Furthermore, each of the link sets may further include a second link shaft connected to a second end of each of a plurality of second links. Therefore, a position of the second link shaft is capable of being adjusted by the shift lever.

In addition, the shift lever may include: a second link shaft adjustment part connected to both ends of the second link shaft; a second link shaft adjustment shaft fixed to a position separated from the second link shaft by a predetermined distance; and a manipulation part which extends from a first side of the second link shaft adjustment shaft in a direction perpendicular to the second link shaft adjustment shaft and which is configured to be rotated around the second link shaft adjustment shaft within a predetermined angle range.

In addition, the planetary gear may include: a ring gear externally meshing with a first driving gear formed on the input shaft, the ring gear having gear teeth on an outer circumferential surface and an inner circumferential surface thereof; a plurality of satellite gears internally meshing with the ring gear; a sun gear which is positioned at a center of the ring gear and which is externally meshing with the satellite gears; and a carrier which is connected to the plurality of satellite gears and which has a central shaft concentric to the input shaft, the carrier having a predetermined hollow such that the input shaft penetrates the carrier. Therefore, the one-way clutch provided between the first link and the output shaft may be configured such that the one-way clutch transmits power to the carrier and the one-way clutch is not directly connected to the output shaft.

Furthermore, the input shaft may include a first driving gear configured to transmit power to the planetary gear. Furthermore, the driven shaft may include: a first driven gear which is connected to the first driving gear and which has a gear ratio such that the driven shaft is accelerated faster than the input shaft; a bearing which is separated from the input shaft by a predetermined distance such that the bearing has a central axis parallel to the input shaft and which supports the driven shaft; and a second driving gear formed such that the second driving gear has a diameter larger than a diameter of the first driven gear. Furthermore, the first link shaft may include: a second driven gear which is connected to the second driving gear and which has a gear ratio such that the first link shaft is accelerated faster than the driven shaft.

### Advantageous Effects

According to an aspect of the present disclosure, it is possible to significantly reduce noise, vibration, and impact by having a configuration in which the rotation direction of the second driven gear, the eccentric disk 501, or the first link shaft 51 and the rotation direction of the output shaft 7 are identical.

In addition, in order to solve the problem of unstable shifting when an input number of revolutions is low due to characteristics of the link actuator, a predetermined multi-stage gearshift is provided so as to increase the number of revolutions transmitted to the link actuator and to improve shifting stability.

In addition, it is possible to prevent interference between members from occurring by positioning, on an outer side of the link actuator, a pivot point (the second link shaft adjustment shaft 62) that adjusts a shift ratio of the link actuator.

In addition, the motor-integrated continuously variable transmission is provided in a hybrid type so as to be rotated by receiving power from outside or power from the motor.

### Description of Drawings

FIG. 1 is a perspective view illustrating a continuously variable transmission according to an embodiment of the present disclosure.

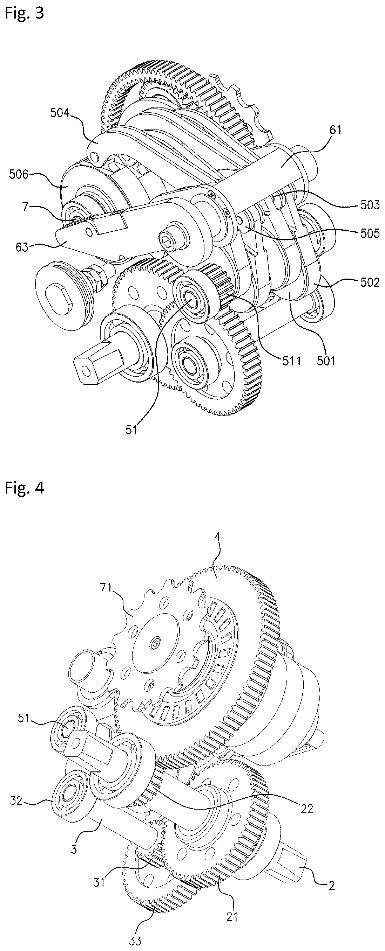

FIG. 2 to FIG. 4 are perspective views illustrating the continuously variable transmission from which a frame is removed according to an embodiment of the present disclosure.
FIG. 5 shows a process of shifting the continuously variable transmission according to an embodiment of the present disclosure.

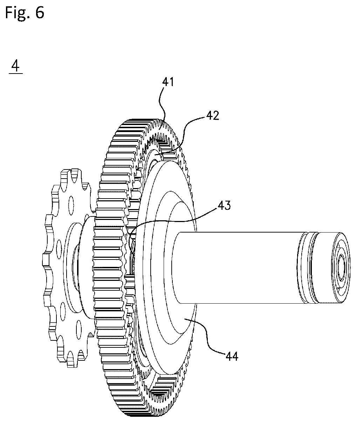

FIG. 6 is an exploded perspective view illustrating a planetary gear applied to the continuously variable transmission according to an embodiment of the present disclosure.
FIG. 7 is a perspective view illustrating a motor-integrated continuously variable transmission according to an embodiment of the present disclosure.
FIG. 8 is a front view of FIG. 7.

### Mode for Invention

Hereinafter, various embodiments of the present document are described with reference to the accompanying drawings. However, this is not intended to limit technologies described in the present document to specific embodiments, and should be understood to include various modifications, equivalents, and/or alternatives of the embodiments of the present document. Regarding the description of the drawings, similar reference numerals may be used for similar components.

In the present document, expressions such as "include", "may include", "comprise", "may comprise" and so on used herein indicate existence of corresponding features (for example, numeric values, functions, operations, or components such as parts), and does not exclude existence of additional features.

In the present document, expressions such as "A or B", "at least one of A and/or B", "one or more of A and/or B", and so on may include all possible combinations of items listed together with the expressions. For example, "A or B", "at least one of A and B", or "at least one of A or B" may refer to all of a case of (1) including at least one A, (2) including at least one B, or (3) including both at least one A and at least one B.

Expressions such as "first" or "second" used in the present document may modify various components regardless of the order and/or importance, and are only used to distinguish one component from another component and does not limit the components. For example, a first user device and a second user device may represent different user devices regardless of the order or importance. For example, a first component may be named a second component without departing from the scope of rights described in the present document. Furthermore, similarly, the second component may also be named the first component.

A case where a certain component (for example, a first component) is described to be "operatively or communicatively coupled with/to" another component (for example, a second component) is to be understood as a case where the certain component can be directly connected to another component or can be connected thereto with still another component (for example, a third component) therebetween. On the other hand, a case where a certain component (for example, a first component) is described to be "directly connected" to another component (for example, a second component) can be understood as a case where no other component (for example, a third component) is present between the certain component and another component.

Terms used in the present document are merely used to describe a specific embodiment and may not be intended to limit the scope of other embodiments. A singular expression may include a plural expression unless there is a contextually distinctive difference. Terms used herein, including technical or scientific terms, may have the same meaning as commonly understood by a person of ordinary skill in the technical field described in the present document. Among terms used in the present document, terms defined in general dictionaries may be construed to have the same or similar meanings, respectively, as or to the meanings the terms have in the context of related technology, and the terms are not to be construed to have ideal or overly formal meanings, respectively, unless clearly defined in the present document. In some cases, even terms defined in the present document may not be construed to exclude embodiments of the present document.

It is needless to say that various modifications can be performed by those skilled in the art without departing from the gist of the present disclosure as claimed in claims of the present disclosure, and these modifications are not to be construed separately from the technical idea or the technical outlook of the present disclosure.

The terms "a vertical reciprocating motion", "an upper end", "a lower end", and so on used in the description of the present disclosure are defined on the basis of the drawings, and a shape and a position of each configuration are not limited by these terms.

According to an embodiment of the present disclosure, there is provided a continuously variable transmission including: an input shaft 2 configured to receive power from outside; a planetary gear 4 configured to receive a part of the power transmitted from the input shaft 2; a driven shaft 3 configured to receive a part of the power transmitted from the input shaft 2; a first link shaft 51 configured to be rotated by receiving power transmitted from the driven shaft 3; a link actuator configured to be operated by rotation of the first link shaft 51; a shift lever 6 configured to adjust a shift ratio of the link actuator; and an output shaft 7 configured to receive power transmitted from the link actuator and the planetary gear 4. Furthermore, the link actuator includes: an eccentric disk 501 configured to be eccentrically rotated around the first link shaft 51; a cam 502 configured to perform a vertical reciprocating motion by rotation of the eccentric disk 501; a first link 504 connected to the cam 502 and configured to transmit power to the output shaft 7; and a one-way clutch 506 provided between the first link 504 and the output shaft 7 and configured to transmit power only in the direction in which the output shaft 7 is rotated. Therefore, as the first link shaft 51 is rotated by the driven shaft 3, the first link shaft 51 and the output shaft 7 are driven in the same rotation direction.

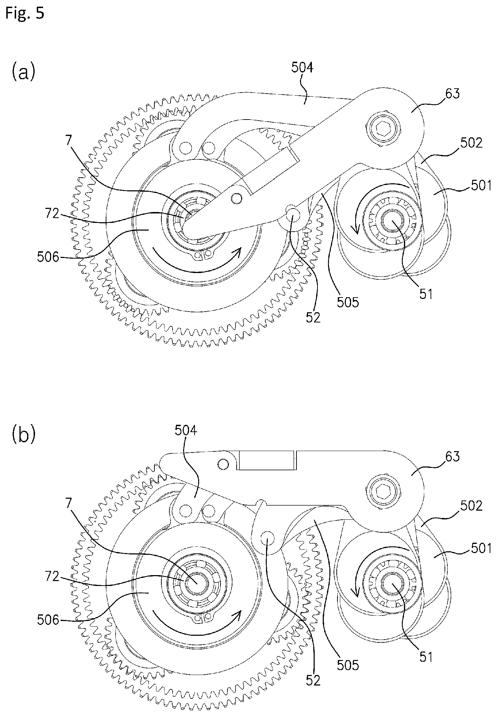

According to a structure as described above, as illustrated in FIG. 5, the first link shaft 51 and the output shaft 7 have the same rotation direction.

Accordingly, an action point (particularly, the eccentric disk 501) in a process of transmitting power to the output shaft 7 by the first link shaft 51, the eccentric disk 501, a second link shaft adjustment shaft 62, a second link shaft 52, and the first link 504 is different from that in Korean Patent No. 10-1241819, so that noise, vibration, and impact are significantly reduced compared to the related art.

A central shaft (a rotary shaft) of the input shaft 2, the shift lever 6, the link actuator, and so on may be fixed to a frame 1 by a member such as a bearing.

A part of the power (attractive force, engine/motor power, or the like) transmitted by the input shaft 2 may be transmitted to the output shaft 7 by the planetary gear 4, and energy may be transmitted to a portion where the power is needed by a member such as a gear or a sprocket 71 formed at an end portion of the output shaft 7.

The rest part of the power excluding losses due to friction and so on is transmitted to the link actuator through the driven shaft 3 and is used in shifting within a predetermined range.

The shift lever 6 may adjust the shift ratio by adjusting an operation radius of the link actuator. At this time, the shift lever 6 has a shape which is not fastened to a specific stage, but rotates around the second link shaft adjustment shaft 62 which will be described later, so that it is possible to perform continuously variable transmission without "stages".

In addition, the link actuator may include a plurality of link sets including the eccentric disk 501, the cam 502, the first link 504, and the one-way clutch 506. Furthermore, each of the link sets may include: a hinge part 503 connected to a first side of the cam 502; and a second link 505 having a first end connected to the hinge part 503 such that the second link 505 extends from the hinge part 503. Furthermore, a first end of the first link 504 is connected to the hinge part 503 and a second end of the first link 504 is connected to the one-way clutch 506. Furthermore, the each of the link sets may further include the second link shaft 52 connected to a second end of each of a plurality of second links 505. Therefore, a position of the second link shaft 52 may be adjusted by the shift lever 6.

A shifting impact may be minimized as the appropriate number of link sets is provided. In the drawings, an embodiment in which four link sets are provided is illustrated. In the case of an example of having three link sets in the related art, a shifting impact is partially generated. Even in the case of having five or more link sets, there were problems of deterioration in maintainability/durability arise in that the continuously variable transmission becomes unstable and the structure thereof becomes complicated.

In order to minimize a shifting impact, it is preferable that the eccentric disks 501 are coupled to be eccentrically fixed to each other in different directions (at different positions) with respect to the first link shaft 51 as illustrated in FIG. 5.

The eccentric disk 501 rotates eccentrically by the rotation of the first link shaft 51, and the cam 502 (the hinge part 503) connected in a form of a hinge/bearing to an outer side of the eccentrically rotating eccentric disk 501 reciprocates vertically with respect to the first link shaft 51.

The one-way clutch 506 limits the movement of the first link 504 so that only movement of the first link 504 in one direction is transmitted to the planetary gear 4 (a carrier 44).

In addition, the shift lever 6 may include: a second link shaft adjustment part 61 connected to both ends of the second link shaft 52; the second link shaft adjustment shaft 62 fixed to a position separated from the second link shaft 52 by a predetermined distance; and a manipulation part 63 which extends from a first side of the second link shaft adjustment shaft 62 in a direction perpendicular to the second link shaft adjustment shaft 62 and which is configured to be rotated around the second link shaft adjustment shaft 62 within a predetermined angle range.

When an end portion of the manipulation part 63 is positioned at an upper end, the second link shaft 52 is also fixed to a relatively highest position, so that a height of a bottom dead center of the hinge part 503 becomes higher, and a stroke length is shortened. Accordingly, the first link 504 has a shortened length/speed of transmission to the one-way clutch and performs a function of a low gear.

On the other hand, when the end portion of the manipulation part 63 is positioned at a lower end, the second link shaft 52 is also fixed to a relatively lowest position, so that a height of the bottom dead center of the hinge part 503 becomes lower, and the stroke length becomes longer. Accordingly, the first link 504 has an elongated length/speed of transmission to the one-way clutch and performs a function of a high gear.

A "direction perpendicular" from the "manipulation part 63 which extends from the first side of the second link shaft adjustment shaft 62 in the direction perpendicular to the second link shaft adjustment shaft 62 and which is configured to be around the second link shaft adjustment shaft 62 within the predetermined angle range" is not limited to the "perpendicular" in the geometric sense, and includes a configuration equivalent to a shape/structure of rotating the second link shaft adjustment shaft 62 with a relatively small force due to a predetermined moment force.

The "predetermined angle range" means an angle range acquired by connecting a point when the second link shaft 52 is positioned at the uppermost position, a center point of the second link shaft adjustment shaft 62, and a point when the second link shaft 52 is positioned at the lowermost position, and it is preferable that the angle range is formed in a range of 25 degrees to 50 degrees.

Furthermore, the planetary gear 4 may include: a ring gear 41 externally meshing with a first driving gear 21 formed on the input shaft 2, the ring gear 41 having gear teeth on an outer circumferential surface and an inner circumferential surface thereof; a plurality of satellite gears 42 internally meshing with the ring gear 41; a sun gear 43 which is positioned at a center of the ring gear 41 and which is externally meshing with the satellite gears 42; and the carrier 44 which is connected to the plurality of satellite gears 42 and which has a central shaft concentric to the input shaft 2, the carrier 44 having a predetermined hollow such that the input shaft 2 penetrates the carrier 44. The one-way clutch 506 may be configured such that the one-way clutch 506 transmits power to the carrier 44 and the one-way clutch 506 is not directly connected to the output shaft 7.

Effects of the present disclosure may be realized by organically combining detailed configurations of the link actuator and detailed configurations of the planetary gear 4.

According to a structure of the planetary gear 4, forces from two sources may generate a resultant force without interfering with each other. Since a part of the power of the input shaft 2 is transmitted through an outer side of the ring gear 41 and the power transmitted from the link actuator is transmitted to the planetary gear 42 through the carrier 44, the power is transmitted to the output shaft 7 without interference, and a resultant force is generated.

In addition, the input shaft 2 may include the first driving gear 21 that transmits power to the planetary gear 4. Furthermore, the driven shaft 3 may include: a first driven gear 31 which is connected to the first driving gear 21 and which has a gear ratio such that the driven shaft 3 is accelerated faster than the input shaft 2; a bearing 32 which is separated from the input shaft 2 by a predetermined distance such that the bearing 32 has a central axis parallel to the input shaft 2 and which supports the driven shaft 3; and a second driving gear 33 formed such that the second driving gear 33 has a diameter larger than a diameter of the first driven gear 31. Furthermore, the first link shaft 51 may include a second driven gear 511 which is connected to the second driving gear 33 and which has a gear ratio such that the first link shaft 51 is accelerated faster than the driven shaft 3.

As described above, stable shifting is capable of being realized by significantly increasing the number of revolutions input to the link actuator by accelerating, in advance, the power transmitted to the link actuator and transmitting the power to the link actuator.

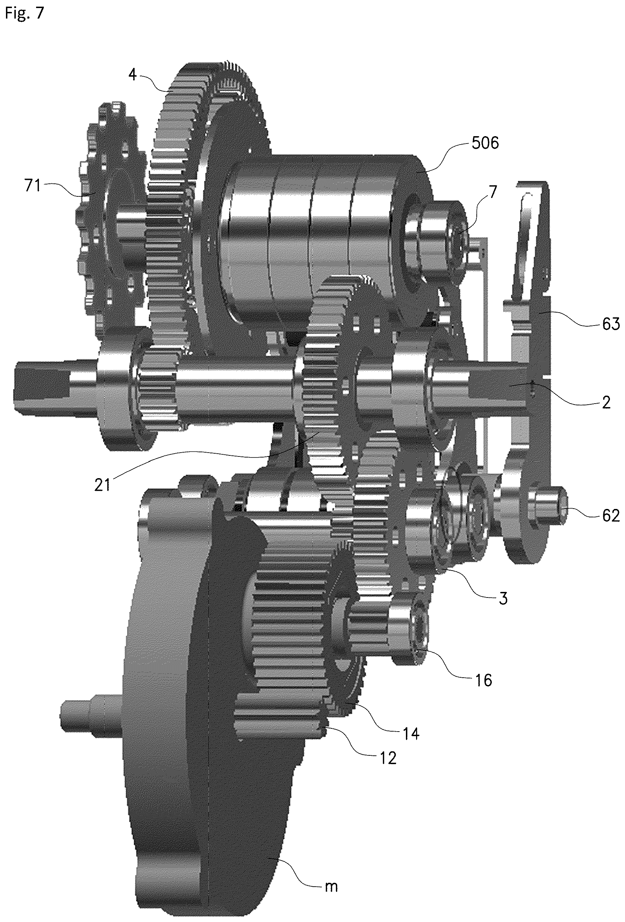

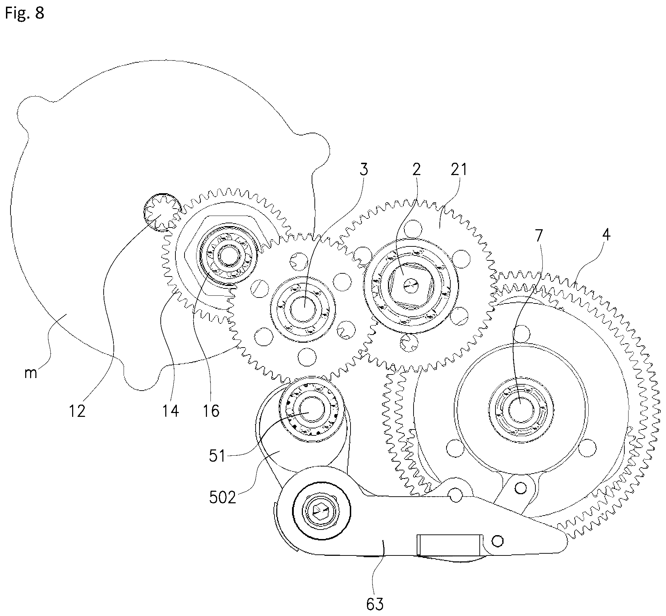

FIG. 7 is a perspective view illustrating a motor-integrated continuously variable transmission according to an embodiment of the present disclosure, and FIG. 8 is a front view of FIG. 7.

Referring to FIG. 7 and FIG. 8, in the present disclosure, the driven shaft 3 is configured to be rotated by selectively receiving power input from a motor m or the input shaft 2.

That is, in the present disclosure, power is capable of being input by the motor m.

First, a rotational force of the motor m is transmitted to a motor shaft, is decelerated by a deceleration gear 14 and a gear that is formed on the motor shaft, and is transmitted to the driven shaft 3. At this time, a one-way clutch 16 is formed in the deceleration gear 14 so that the deceleration gear 14 is rotated in one direction, and power of the deceleration gear 14 is transmitted to the driven shaft 3.

Meanwhile, a gear ratio of the driven shaft 3 is configured such that the deceleration is realized when the motor m is driven and the acceleration is realized when the input shaft 2 is driven.

In addition, the motor m and the input shaft 2 are configured such that the motor m is rotated in one direction and the input shaft 2 is rotated in one direction, the input shaft 2 is not operated when the motor m is driven, and the motor m is not driven when the input shaft 2 is operated. Accordingly, there is no interference between the motor m and the input shaft 2, so that load due to mutual operation may be prevented.

### * Description of Reference Numerals

1: Frame
2: Input shaft
21: First driving gear
3: Driven shaft
31: First driven gear
32: Bearing
33: Second driving gear
4: Planetary gear
41: Ring gear
42: Satellite gear
43: Sun gear
44: Carrier
501: Eccentric disk
502: Cam
503: Hinge part
504: First link
505: Second link
506: One-way clutch
51: First link shaft
511: Second driven gear
52: Second link shaft
6: Shift lever
61: Second link shaft adjustment part
62: Second link shaft adjustment shaft
63: Manipulation part
7: Output shaft
71: Sprocket
m: Motor
12: Motor shaft
14: Deceleration gear
16: One-way clutch

## Claims

1. A motor-integrated continuously variable transmission comprising:
an input shaft configured to receive power from outside;
a planetary gear configured to receive a part of the power transmitted from the input shaft;
a driven shaft configured to receive a part of the power transmitted from the input shaft;
a first link shaft configured to be rotated by receiving power transmitted from the driven shaft;
a link actuator configured to be operated by rotation of the first link shaft;
a shift lever configured to adjust a shift ratio of the link actuator; and
an output shaft configured to receive power transmitted from the link actuator and the planetary gear,
wherein the link actuator comprises:
an eccentric disk configured to be eccentrically rotated around the first link shaft;
a cam configured to perform a vertical reciprocating motion by rotation of the eccentric disk;
a first link connected to the cam and configured to transmit power to the output shaft; and
a one-way clutch provided between the first link and the output shaft and configured to transmit power only in a direction in which the output shaft is rotated,
wherein, as the first link shaft is rotated by the driven shaft, the first link shaft and the output shaft are driven in the same rotation direction,
wherein the motor-integrated continuously variable transmission further comprises:
a motor shaft configured to driven by a motor;
a deceleration gear configured to be decelerated by the driving shaft and to transmit power to the driven shaft; and
a one-way clutch mounted on the deceleration gear and configured to be rotated in one direction, and
wherein the driven shaft receives power from the input shaft or the motor shaft in a hybrid manner.

2. The motor-integrated continuously variable transmission of claim 1, wherein the link actuator further comprises:
a plurality of link sets comprising the eccentric disk, the cam, the first link, and the one-way clutch that is provided between the first link and the output shaft,
wherein each of the link sets comprises:
a hinge part connected to a first side of the cam; and
a second link having a first end connected to the hinge part such that the second link extends from the hinge part,
wherein a first end of the first link is connected to the hinge part,
wherein a second end of the first link is connected to the one-way clutch provided between the first link and the output shaft,
wherein each of the link sets further comprises a second link shaft connected to a second end of each of a plurality of second links, and
wherein a position of the second link shaft is adjusted by the shift lever.

3. The motor-integrated continuously variable transmission of claim 2, wherein the shift lever comprises:
a second link shaft adjustment part connected to both ends of the second link shaft;
a second link shaft adjustment shaft fixed to a position separated from the second link shaft by a predetermined distance; and
a manipulation part which extends from a first side of the second link shaft adjustment shaft in a direction perpendicular to the second link shaft adjustment shaft and which is configured to be rotated around the second link shaft adjustment shaft within a predetermined angle range.

4. The motor-integrated continuously variable transmission of claim 1, wherein the planetary gear comprises:
a ring gear externally meshing with a first driving gear formed on the input shaft, the ring gear having gear teeth on an outer circumferential surface and an inner circumferential surface thereof;
a plurality of satellite gears internally meshing with the ring gear;
a sun gear which is positioned at a center of the ring gear and which is externally meshing with the satellite gears; and
a carrier which is connected to the plurality of satellite gears and which has a central shaft concentric to the input shaft, the carrier having a predetermined hollow such that the input shaft penetrates the carrier, and
wherein the one-way clutch provided between the first link and the output shaft is configured such that the one-way clutch transmits power to the carrier and the one-way clutch is not directly connected to the output shaft.

5. The motor-integrated continuously variable transmission of claim 1, wherein the input shaft comprises:
a first driving gear configured to transmit power to the planetary gear,
wherein the driven shaft comprises:
a first driven gear which is connected to the first driving gear and which has a gear ratio such that the driven shaft is accelerated faster than the input shaft;
a bearing which is separated from the input shaft by a predetermined distance such that the bearing has a central axis parallel to the input shaft and which supports the driven shaft; and
a second driving gear formed such that the second driving gear has a diameter larger than a diameter of the first driven gear, and
wherein the first link shaft comprises:
a second driven gear which is connected to the second driving gear and which has a gear ratio such that the first link shaft is accelerated faster than the driven shaft.
